# EUROPEAN PATENT APPLICATION

(11) **EP 4 632 596 A1**
(43) Date of publication of application: **15.10.2025**
(21) Application number: 23915562.5
(22) Date of filing: 08.08.2023
(51) Int. Cl.: G06F 16/2457

(54) **TRAVEL SEARCH METHOD AND APPARATUS, ELECTRONIC DEVICE, AND STORAGE MEDIUM**

(30) Priority: 10.01.2023 CN 202310032141
(71) Applicant: Travelsky Technology Limited, Beijing 101318 (CN)
(72) Inventor: GUO, Dan, Beijing 101318 (CN); ZHANG, Honghai, Beijing 101318 (CN); YANG, Yongkai, Beijing 101318 (CN); WU, Xuecheng, Beijing 101318 (CN); ZHAN, Ying, Beijing 101318 (CN); LI, Ruoyu, Beijing 101318 (CN); MA, Wei, Beijing 101318 (CN)
(74) Representative: Meissner Bolte Partnerschaft mbB
(86) International application number: PCT/CN2023/111648
(87) International publication number: WO 2024/148800

(57) **Abstract**

Provided in the present application are an itinerary search method and apparatus, an electronic device, and a storage medium. The itinerary search method includes: first, generating rules for itinerary and fare calculations; then, when a user request is received, determining a target rule matched with the user request from the above rules, performing the itinerary and fare calculations based on the target rule, and outputting corresponding results. According to the present application, personalized configuration of itinerary and fare calculations for some air routes in specific markets and channels can be achieved, and personalized configuration rules are matched with the user request for calculation to achieve a personally customized itinerary search for an airline. Based on the present application, the airline can be helped to achieve more refined control of an itinerary search result. Especially during online promotion of the airline, a series of dynamic adjustments can be made to maximize revenue.

## Description

This patent application claims the priority of Chinese Patent Application No. 202310032141.0, entitled "ITINERARY SEARCH METHOD AND APPARATUS, ELECTRONIC DEVICE, AND STORAGE MEDIUM" filed with the China National Intellectual Property Administration on January, 10, 2023, the disclosure of which is incorporated by reference herein in its entirety.

### TECHNICAL FIELD

The present application relates to the technical field of software, more specifically to an itinerary search method and apparatus, an electronic device, and a storage medium.

### BACKGROUND

Most of the itinerary search products on the current market provide rather neutral results. That is to say, the search engine will calculate the itinerary and the fare based on its own established rules, and return the results to users in an established sorting manner. The results returned in this way may not necessarily be what airlines expect.

In this regard, how to enable the airlines to perform personalized itinerary calculations for the search requests of users from different channels based on their own market demands has become an urgent problem to be solved at the present stage.

### SUMMARY

In view of this, to solve the above problems, the present application provides an itinerary search method and apparatus, an electronic device, and a storage medium. The technical solutions are as follows:
An itinerary search method, including:
generating rules for itinerary and fare calculations; and
when a user request is received, determining a target rule matched with the user request from the rules, performing the itinerary and fare calculations based on the target rule, and outputting corresponding results.

Preferably, the generating rules for itinerary and fare calculations includes:
obtaining, in response to a rule configuration instruction, point-of-sale information, air route information, itinerary conditions, a fare parameter, a filtering parameter, and a sorting parameter that correspond to each rule to be configured; and
performing simulation based on the point-of-sale information, the air route information, the itinerary conditions, the fare parameter, the filtering parameter, and the sorting parameter that correspond to each rule to determine a status of each rule, where the status includes an effective status or an ineffective status.

Preferably, the determining a target rule matched with the user request from the rules, performing the itinerary and fare calculations based on the target rule, and outputting corresponding results includes:
extracting rules in the effective status from the rules, and determining a matching order based on ranks of the extracted rules;
sequentially matching the point-of-sale information and the air route information between the user request and the extracted rules in the matching order to determine the target rule in the extracted rules that matches the user request;
if the target rule is not empty, determining a calculation order based on ranks of the itinerary conditions in the target rule; and
sequentially calculating the itinerary conditions and the fare parameter that correspond to the target rule in the calculation order, filtering the calculated results based on the filtering parameter corresponding to the target rule, and sorting the filtered results based on the sorting parameter corresponding to the target rule to output a sorted result.

Preferably, the determining a target rule matched with the user request from the rules, performing the itinerary and fare calculations based on the target rule, and outputting corresponding results further includes:
returning, if the target rule is empty, a neutral result.

An itinerary search apparatus, including:
a personalized configuration front-end configured to generate rules for itinerary and fare calculations; and
a search engine configured to determine, when a user request is received, a target rule matched with the user request from the rules, perform the itinerary and fare calculations based on the target rule, and output corresponding results.

Preferably, the personalized configuration front-end is specifically configured to
obtain, in response to a rule configuration instruction, sales location information, air route information, itinerary conditions, a fare parameter, a filtering parameter, and a sorting parameter that correspond to each rule to be configured; and
the search engine is further configured to
perform simulation based on the sales location information, the air route information, the itinerary conditions, the fare parameter, the filtering parameter, and the sorting parameter that correspond to each rule to determine a status of each rule, where the status includes an effective status or an ineffective status.

Preferably, the search engine configured to determine, when a user request is received, a target rule matched with the user request from the rules, perform the itinerary and fare calculations based on the target rule, and output corresponding results is specifically configured to:
extract rules in the effective status from the rules, and determine a matching order based on ranks of the extracted rules; sequentially match the point-of-sale information and the air route information between the user request and the extracted rules in the matching order to determine the target rule in the extracted rules that matches the user request; if the target rule is not empty, determine a calculation order based on ranks of the itinerary conditions in the target rule; and sequentially calculate the itinerary conditions and the fare parameter that correspond to the target rule in the calculation order, filter the calculated results based on the filtering parameter corresponding to the target rule, and sort the filtered results based on the sorting parameter corresponding to the target rule to output a sorted result.

Preferably, the search engine configured to determine, when a user request is received, a target rule matched with the user request from the rules, perform the itinerary and fare calculations based on the target rule, and output corresponding results is further configured to
return, if the target rule is empty, a neutral result.

An electronic device, including at least one memory and at least one processor, where the memory stores an application program, the processor calls the application program stored in the memory, and the application program is configured to implement the itinerary search method.

A storage medium, storing computer program codes which, when executed, implement the itinerary search method.

Compared with the prior art, the present application has the following beneficial effects:
The present application provides an itinerary search method and apparatus, an electronic device, and a storage medium. First, rules for itinerary and fare calculations are generated; then, when a user request is received, a target rule matched with the user request is determined from the above rules, the itinerary and fare calculations are performed based on the target rule, and corresponding results are outputted. According to the present application, personalized configuration of itinerary and fare calculations for some air routes in specific markets and channels can be achieved, and personalized configuration rules are matched with the user request for calculation to achieve a personally customized itinerary search for an airline. Based on the present application, the airline can be helped to achieve more refined control of an itinerary search result. Especially during online promotion of the airline, a series of dynamic adjustments can be made to maximize revenue.

### BRIEF DESCRIPTION OF THE DRAWINGS

To more clearly illustrate the technical solutions in the embodiments of the present application or in the prior art, the accompanying drawings that need to be used in the description of the embodiments or the prior art will be briefly introduced below. Apparently, the accompanying drawings in the description below illustrate some embodiments of the present application. Those of ordinary skill in the art can also derive other accompanying drawings from these accompanying drawings without creative efforts.
FIG. 1 is a flowchart of an itinerary search method provided by an embodiment of the present application;
FIG. 2 is a schematic structural diagram of an itinerary search apparatus provided by an embodiment of the present application;
FIG. 3 is a schematic interaction diagram of an itinerary search apparatus provided by an embodiment of the present application;
FIG. 4 is a signaling flowchart of an itinerary search method provided by an embodiment of the present application;
FIG. 5 is a schematic diagram of airline rule setting provided in an embodiment of the present application; and
FIG. 6 is a schematic structural diagram of an electronic device provided by an embodiment of the present application.

### DETAILED DESCRIPTION OF THE EMBODIMENTS

Embodiments of the present application will be described in more detail below with reference to the accompanying drawings. Although some embodiments of the present application are shown in the drawings, it should be understood that the present application can be implemented in various forms and should not be construed as being limited to the embodiments set forth herein. Instead, these embodiments are provided for a more thorough and complete understanding of the present application. It should be understood that the drawings and embodiments of the present application are for illustrative purposes only and are not intended to limit the scope of protection of the present application.

The term "include" and its variations used herein are open, that is, "including but not limited to". The term "based on" means "at least partially based on". The term "one embodiment" means "at least one embodiment"; the term "another embodiment" means "at least one another embodiment"; and the term "some embodiments" means "at least some embodiments". Related definitions of other terms are given in the following descriptions.

It is to be noted that the concepts such as "first", "second" mentioned in the present application are only used to distinguish different apparatuses, modules or units, and are not used to define an order of functions performed by these apparatuses, modules or units or their interdependent relationships.

It is to be noted that the modifiers "one" and "a plurality of" mentioned in the present application are illustrative rather than restrictive. Those skilled in the art should understand that the modifiers should be understood as "one or more" unless otherwise explicitly specified in the context.

In recent years, on the one hand, with the rapid development of the online travel market, airlines and agents have gradually established their own online sales systems, the proportion of online sales has been increasing year by year, online reservation and ticket purchasing have become the top choice for many passengers, and the passengers put forward new requirements for the timeliness and accuracy of travel information, the convenience and richness of ticket-purchasing services, the innovation and diversity of modes, and the breadth and depth of travel products. On the other hand, the competition in the passenger travel market is becoming increasingly fierce, international air routes of the airlines within the industry are being reduced, there is a surplus of production resources such as flights, and the airlines are becoming similar in terms of air routes, products, and services. Outside the industry, transportation means like high-speed railways continuously exert pressure on the airlines. Internet giants who control the traffic flow at the channel end keep squeezing the profit margins of the airlines. As air ticket sales are the primary source of income for the airlines, they need to provide more refined services.

Against this background, the airlines need to offer different search results for the same air route or market to different users or channels based on their own market strategies, so as to maximize revenue. Especially in recent years, when the airlines have been vigorously promoting direct sales, they hope to increase the sales ratio of direct-sales channels while maintaining their competitiveness in agency channel sales. This requires that when users conduct itinerary searches or fare searches, the airlines can set different personalized solutions for different users based on their own market strategies, thus providing different search results.

Most of the itinerary search products on the current market provide rather neutral results. That is to say, the search engine will calculate the itinerary and the fare based on its own established rules, and return the results to users in an established sorting manner. The results returned in this way may not necessarily be what airlines expect.

In response to this, the present application provides a comprehensive solution for the airlines, so that the airlines can conduct personalized itinerary calculations for the search requests of users from different channels based on their own market demands, appropriately adjust the results, and return them to the users in the way they consider optimal.

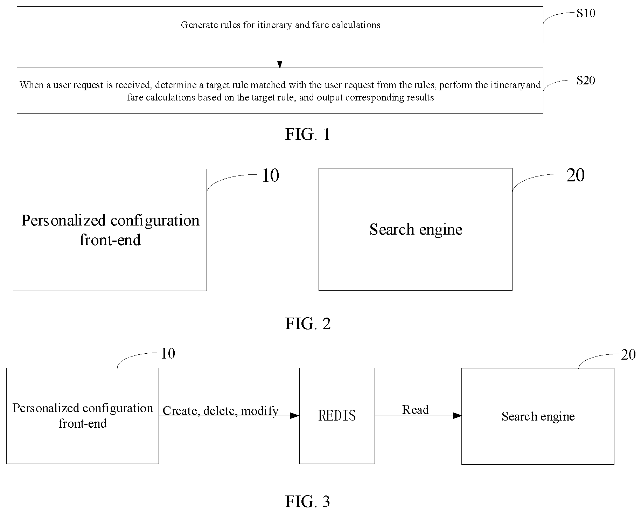

Reference is made to FIG. 1. FIG. 1 is a flowchart of an itinerary search method provided by an embodiment of the present application. The itinerary search method includes the following steps:
S10: generating rules for itinerary and fare calculations; and
S20: when a user request is received, determining a target rule matched with the user request from the rules, performing the itinerary and fare calculations based on the target rule, and outputting corresponding results.

To solve the problem that most of the itinerary search products in the current market provide rather neutral results as mentioned above, and to ensure the richness and accuracy of the search results, the present application integrates existing systems and modules, and proposes the following solution from the perspective of overall solution design:

A configuration front-end conducts personalized itinerary management and synchronizes it to a calculation engine in real time, and the calculation engine receives a user request and returns a result to a user based on personalized configuration.

Reference is made to FIG. 2. FIG. 2 is a schematic structural diagram of an itinerary search apparatus provided by an embodiment of the present application. The itinerary search method in the embodiment of the present application can be implemented by the itinerary search apparatus. The itinerary search apparatus includes two parts: a personalized configuration front-end 10 (i.e., GUI) and a search engine 20. Reference is made to FIG. 3. FIG. 3 is a schematic interaction diagram of an itinerary search apparatus provided by an embodiment of the present application. In practical applications, data synchronization between the two modules, the personalized configuration front-end 10 and the search engine 20, can be carried out through REDIS (a memory database), where one personalized configuration front-end 10 synchronizes data to a plurality of search engines 20 simultaneously, the personalized configuration front-end 10 can create, delete, and modify the rules for itinerary and fare calculations in the REDIS, and the search engine 20 can read the rules in the REDIS.

Specifically, in this embodiment of the present application, the user can configure point-of-sale information, air route information, itinerary conditions, a fare parameter, a filtering parameter, and a sorting parameter that correspond to each rule in the REDIS by the personalized configuration front-end 10 to complete the creation of the rule. In addition, the user can modify any one or more of the point-of-sale information, the air route information, the itinerary conditions, the fare parameter, the filtering parameter, and the sorting parameter that correspond to the created rule in the REDIS by the personalized configuration front-end 10 to complete the modification of the rule. Certainly, the user can also delete the created rule in the REDIS. Thus, the rules for itinerary and fare calculations can be generated by the personalized configuration front-end 10.

The search engine 20 can read the rules in the REDIS after obtaining the user request, match the user request with the read rules in terms of the point-of-sale information and the air route information, calculate the itinerary conditions and the fare parameter that correspond to the rule matched with the user request, that is, the target rule, filter the calculated results based on the filtering parameter corresponding to the target rule, and finally sort the filtered results based on the sorting parameter corresponding to the target rule to output a final result.

During specific implementation, step S10 of "generating rules for itinerary and fare calculations" can include the following steps:
obtaining, in response to a rule configuration instruction, point-of-sale information, air route information, itinerary conditions, a fare parameter, a filtering parameter, and a sorting parameter that correspond to each rule to be configured; and
performing simulation based on the sales location information, the air route information, the itinerary conditions, the fare parameter, the filtering parameter, and the sorting parameter that correspond to each rule to determine a status of each rule, where the status includes an effective status or an ineffective status.

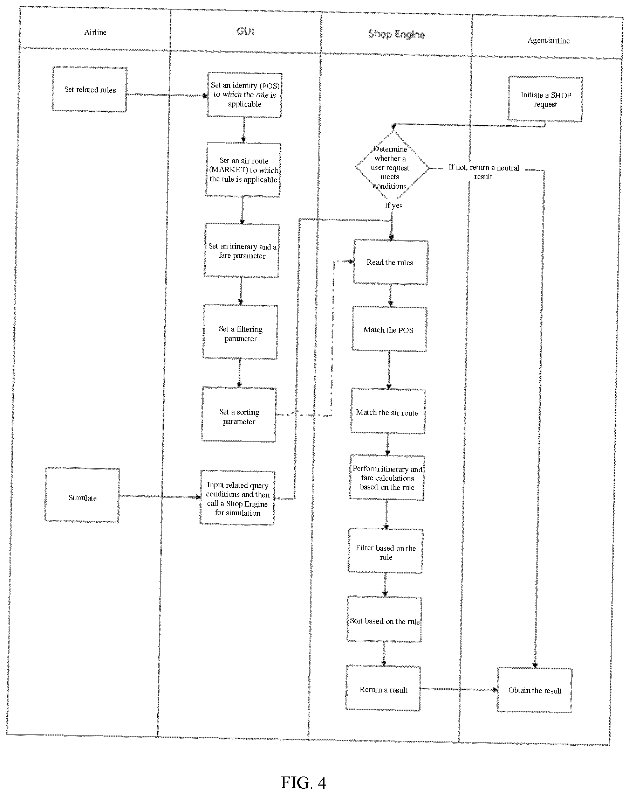

Reference is made to FIG. 4. FIG. 4 is a signaling flowchart of an itinerary search method provided by an embodiment of the present application. Continuing to refer to FIG. 4, the airline can perform personalized configurations for itinerary calculation and fare calculation (i.e., set relevant rules) on some air routes for specific markets and channels at the personalized configuration front-end 10 (i.e., GUI in FIG. 4). This includes sequentially setting an identity (POS, i.e., Point of Sale, point-of-sale information) to which the rule is applicable, setting an air route (Market, i.e., air route information) to which the rule is applicable, setting itinerary conditions and a fare parameter, setting a filtering parameter (i.e., setting screening conditions for results), and setting a sorting parameter (i.e., setting an expected sorting method for the results). In addition, when the airline sets a plurality of rules, the rules can also be sorted by rank, and the rules with high rank will be matched first during calculation.

For this, the personalized configuration front-end 10 obtains, in response to the rule configuration instruction inputted by the airline, the point-of-sale information, the air route information, the itinerary conditions, the fare parameter, the filtering parameter, and the sorting parameter that correspond to each rule. After the rules are saved, they will be synchronized to the search engine 20 (specifically a Shop Engine in FIG. 4) in real time. In addition, for the rule not set to the effective status, a simulated search can be carried out through the simulation function of a page to check whether the results meet the expectation. If the results meet the expectation, the rule can be set to the effective status. Once the rule is set to the effective status, it will be matched in real time during calculation of the search engine 20 and take effect on the corresponding user request.

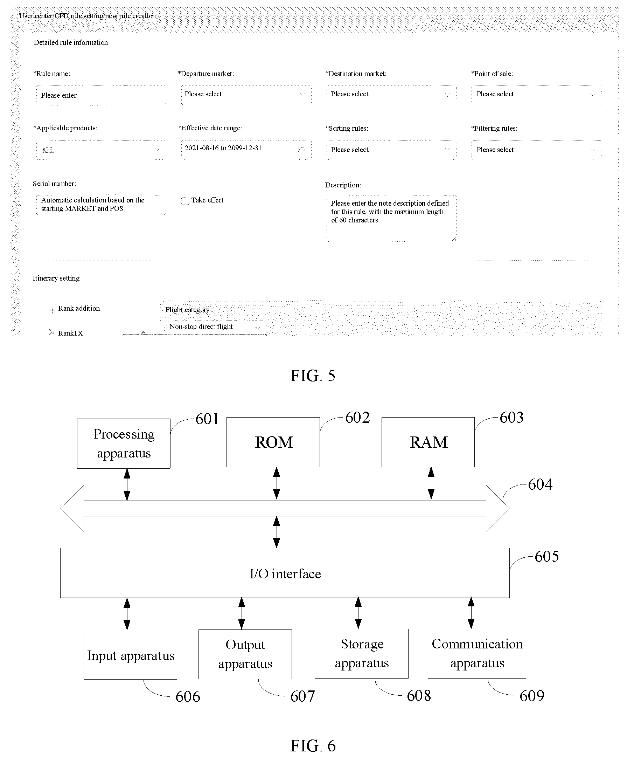

In this embodiment of the present application, the airline can set personalized rules by the personalized configuration front-end 10 and then conduct simulation through the simulation page. Reference is made to FIG. 5. FIG. 5 is a schematic diagram of airline rule setting provided in an embodiment of the present application. Continuing to refer to FIG. 5, the airline can set a rule name, departure and destination markets (i.e., air route information) to which the rule is applicable, a point of sale (i.e., point-of-sale information) to which the rule is applicable, a product to which the rule is applicable, an effective date range of the rule, a serial number (i.e., a rank) of the rule, whether the rule takes effect, a sorting rule (i.e., a sorting parameter), and a filtering rule (i.e., a filtering parameter). On this basis, itinerary conditions or a fare condition (i.e., itinerary conditions and a fare parameter) are set.

If the airline sets a plurality of rules, the personalized configuration front-end 10 will assign a default serial number to each rule based on a default algorithm. The smaller the serial number, the higher the rank. The airline can also adjust the serial number of the rule in a rule list on the page.

After setting the rules, the airline can temporarily save the rules without making them effective and then enter the simulation page for simulation to confirm that the rule setting meets the expectation. On the simulation page, the airline fills in identity information of an inquirer and query conditions as needed, conducts simulation, and then checks results returned by the simulation to verify whether the results meet the expectation. When the user conducts simulation, the corresponding query request enters the search engine 20. The search engine 20 will load all the rules (including both effective and ineffective rules) set by the airline, sort them in ascending order of serial numbers of the rules, and match them one by one. The matching process is the same as the user request matching process (see "rule matching" below for details), and the calculation process after matching is also the same as the user request calculation process (see "rule calculation" below for details).

In addition, in this embodiment of the present application, when the search engine 20 receives the request, it processes the request in the following steps:
In step 1), an applicability determination is made. Continuing to refer to FIG. 4, the search engine 20 will preset applicable conditions based on user requirements. For a user request that meets the applicable conditions (i.e., a SHOP request initiated by an agent/airline in FIG. 4), the processing flow of the subsequent steps will continue. For a user request that does not meet the applicable conditions, a neutral result is returned directly.

In step 2), continuing to refer to FIG. 4, the search engine 20 determines whether it is a simulation request. If it is the simulation request, all the effective and ineffective rules set by the airline are extracted. If it is not the simulation request, all the effective rules are extracted.

Then, the extracted rules are sorted in descending order of ranks and read. Further, the user request and the read rules are matched for POS (i.e., point-of-sale information) and air routes (i.e., air route information) in sequence. That is to say, the rules are matched one by one in the order of ranks from the two dimensions of the air route information and the POS information in the user request. For the rules that are matched, the processing flow of the subsequent steps is executed. In addition, if no rule is matched, a neutral result is returned directly.

In step 3), calculations are made based on itinerary settings and fare settings (i.e., itinerary conditions and fare parameters) in the matched rules, and results that meet the itinerary conditions and the fare conditions are returned.

It is to be noted that the fare options set in the rules include but are not limited to: whether EOE (i.e., End On End, single-segment-added fare) is supported, etc.; and the itinerary conditions set in the rules include but are not limited to: flight types, transfer information (transfer duration and transfer point information), airline restrictions, flight number restrictions, CODE SHARE restrictions, etc.

It is also to be noted that a plurality of itinerary conditions can be set. If there are a plurality of itinerary conditions, a corresponding rank can be set for each itinerary condition. The lower the RANK, the higher the level, which means it is the result that the airline most wants to sell. Accordingly, it should appear more prominently in the final result.

In step 4), for a calculated result set, the results are filtered based on the screening conditions (i.e., filtering parameters) corresponding to the rules, sorted based on the sorting options (i.e., sorting parameters), and then returned to the agent/airline.

During specific implementation, step S20 of "determining a target rule matched with the user request from the rules, performing the itinerary and fare calculations based on the target rule, and outputting corresponding results" can include the following steps:
extracting rules in the effective status from the rules, and determining a matching order based on ranks of the extracted rules;
sequentially matching the point-of-sale information and the air route information between the user request and the extracted rules in the matching order to determine the target rule in the extracted rules that matches the user request;
if the target rule is not empty, determining a calculation order based on ranks of the itinerary conditions in the target rule; and
sequentially calculating the itinerary conditions and the fare parameter that correspond to the target rule in the calculation order, filtering the calculated results based on the filtering parameter corresponding to the target rule, and sorting the filtered results based on the sorting parameter corresponding to the target rule to output a sorted result.

In this embodiment of the present application, after the user request enters the search engine 20, the search engine 20 first makes the applicability determination based on the preset conditions of the airline, that is, whether the airline allows the user request to undergo personalized calculation. If the airline does not allow the user request to undergo the personalized calculation, the search engine 20 directly returns a neutral result. If the airline allows the user request to undergo the personalized calculation, for the user request, the search engine 20 sorts the effective rules in ascending order of serial numbers to determine the matching order. Then, it conducts rule matching based on the information (including the point-of-sale information and the air route information) in the user request. If there is any matched rule (i.e., the target rule), calculation is carried out based on the target rule. Specifically:

### I. Rule matching:

The rule matching process is a process of matching the conditions in the user request with the rules in the system. First, the POS data items (i.e., the point-of-sale information) of the rules are matched based on the user identity information in the user request. If the matching is successful, then a take-off place and an arrival place in the user request are matched with a take-off market (i.e., a departure market) and an arrival market (i.e., a destination market) in the rules respectively (i.e., the air route information is matched).
1. POS matching process: the user identity information in the user request and the information configured in the POS data items of the corresponding rules are listed as shown in Table 1 below.

**Table 1**

| User identity information in request | Description | Example |
|---|---|---|
| posCity | Three-letter code of user's city | BJS |
| iataNumber | User's registration number in IATA | 12345678 |
| travelAgencyCode | OFFICE number registered by user in system or account registered in other GDS, which consists of letters or numbers | PEK111 |
| posCountry | User's country | CN |
| officeOwnedbyCarrier | Airline to which user belongs | ZZ |

It is to be noted that each rule can define a plurality of POS data items. The POS data items are arranged in ascending order of weights, and the weight is automatically calculated by the system (the more detailed the item, the lower the weight). The POS data items with small weight are preferentially matched. The matching process is as follows:
1) extracting the user identity information in the user request;
2) reading out the corresponding point-of-sale information (i.e., POS data items) in the rules, and sorting them in ascending order of weights; and
3) matching the user identity information in the user request with the POS data items one by one in ascending order of weights:
   if none of the POS data items are matched, returning a matching failure, and continuing to match the next rule;
   if a rule with EXCLUDE being TRUE is matched, returning a matching failure, and continuing to match the next rule; or
   if a rule with EXCLUDE being FALSE is matched, returning a matching success, and continuing to match the take-off and arrival markets.

### 2. Take-off and arrival market matching process:

The take-off place and the arrival place in the user request are matched with the take-off market and the arrival market defined in the rule respectively. If both are successfully matched, the rule is considered to be successfully matched and can be used for calculation. The levels of regions involved in market definition are listed as shown in Table 2 below.

**Table 2**

| Data items of market levels in rules | Description | Example |
|---|---|---|
| Airport code | Three-letter code of take-off or arrival airport in request | ORY |
| City code | Three-letter code of city corresponding to airport | PAR |
| State | State to which airport belongs, applicable to countries such as the United States | DE |
| Country | Country to which airport belongs | VE |
| ATPCO Zone | Zone to which airport belongs | 007 |
| Traffic Conference Area | Area to which airport belongs | TC1, TC2, TC3 |
| World | The whole world | XX |

It is to be noted that each rule can define a plurality of take-off and arrival market data items. Each market data item has a weight that is automatically calculated by the system (the more detailed the item, the lower the weight). The matching process is as follows:
1) based on the take-off place in the user request, reading out associated geographical information of the take-off place, including Airport, City, State, Country, ATPCO Zone, TC Area, etc.;
2) reading a list of the market data items from the take-off market in the rule, and matching the take-off place in the user request with the market data items one by one in ascending order of weights;
3) if a market data item in the rule is matched, proceeding to step 4); or
   if none of the market data items are matched, directly returning a matching failure, and continuing to match the next rule;
4) based on the arrival place in the user request, reading out associated geographical information of the arrival place, including Airport, City, State, Country, ATPCO Zone, TC Area, etc.;
5) reading a list of the market data items from the arrival market in the rule, and matching the arrival place in the user request with the market data items one by one in ascending order of weights; and
6) if an arrival market data item is matched, determining that the rule is successfully matched, and directly entering rule calculation; or
   if none of the arrival market data items are matched, directly returning a matching failure, and continuing to match the next rule.

### II. Rule Calculation:

For the user request that fails to match any rule, the search engine 20 directly returns the neutral result. That is to say, if the target rule is empty, the search engine 20 returns the neutral result.

For the user request that successfully matches the target rule, calculations are carried out in sequence starting from rank1 based on the fare parameter and ranks of the itinerary conditions in the target rule.
1) Flights and corresponding fares are generated in sequence based on the itinerary conditions and the fare parameter in the rule.
2) The flights are filtered. If the filtering rule specifies to return all direct flights, then direct flights will not be filtered.
3) The flights are sorted based on ranks. Based on the sorting rule, filtering starts from a first sorting condition. The sorting dimensions are as follows. If multi-dimensional sorting is defined, sorting is first performed by a first sorting dimension. If the data is the same, then sorting is performed by a second sorting dimension, and so on. The specific sorting dimensions are as follows:

### 3.1) Travel time, from short to long

The travel time is a sum of flight durations of all flights in SOLUTION (i.e., the flight combination including the price returned in the result) and all intermediate transfer stopover durations. Sorting is performed from low to high.

### 3.2) Number of transfers, from low to high

The number of transfer points = the total number of flights - 1. Sorting is performed by the number of transfer points from low to high.

### 3.3) Price, total price from low to high

Sorting is performed by the total price of the SOLUTION from low to high.

### 3.4) Take-off time, from early to late

The take-off time is sorted using a take-off date and take-off time of an initial flight in an initial flight segment of the SOLUTION.

### 3.5) Arrival time, from early to late

The arrival time is sorted using an arrival date and arrival time of the last flight segment in the SOLUTION.

### 3.6) ONLINE (connecting flights with the same airline) results ranked higher

For the flights in the SOLUTION, if the airlines of all market parties to which the flights belong are the same, it is considered ONLINE. Otherwise, it is non-ONLINE, that is, interline. The interline SOLUTION should be ranked behind ONLINE.

### 3.7) Non-code share ranked higher

For the flights in the SOLUTION, if the airlines of the market parties to which all the flights belong are the same as the actual operating airlines of the flights, it is considered non-code share. Otherwise, it is code share. The SOLUTION with code share is ranked behind the SOLUTION without code share.

### 3.8) Comprehensive score, from low to high

During calculation, each SOLUTION is scored based on various factors, and sorting is performed by score from low to high.

### 4) The results are returned by RANK from low to high.

Based on the above description, the solution proposed by the present application can help the airline to achieve more refined control of an itinerary search result. Especially during online promotion of the airline, a series of dynamic adjustments can be made to maximize revenue.

It is to be noted that the flowcharts and block diagrams in the accompanying drawings show the system architectures, functions, and operations possibly implemented by systems, methods, nodes, and computer program products according to various embodiments of the present application. In this regard, each block in the flowcharts or block diagrams may represent a module, a program segment, or a part of a code, and the module, the program segment, or the part of the code includes one or more executable instructions for implementing a specified logical function. It should also be noted that, in some alternative implementations, functions marked in the blocks may also occur in a sequence different from that marked in the accompanying drawings. For example, two consecutive blocks may be actually executed substantially in parallel, or sometimes may be executed in a reverse order, depending on a function related. It should also be noted that each box in the block diagram and/or flowchart, and a combination of the boxes in the block diagram and/or flowchart can be implemented by a dedicated hardware-based system that performs a prescribed function or operation, or by a combination of specialized hardware and computer instructions.

Names of messages or information exchanged among a plurality of apparatuses in the embodiments of the present application are for illustrative purposes only and are not intended to limit the scope of such messages or information.

Although all operations are described in a specific order, these operations should not be understood as being required to be performed in the shown specific order or in a sequential order. In a specific context, multitasking and parallel processing may be beneficial.

It should be understood that the steps described in the method embodiments of the present application may be executed in different sequences and/or in parallel. In addition, the method embodiments may include additional steps and/or omit the steps performed and shown. The scope of the present application is not limited in this regard.

Computer program codes for performing the operations in the present application can be written in one or more programming languages or a combination thereof. The programming languages include but are not limited to an object-oriented programming language, such as Java, Smalltalk, and C++, and also include a conventional procedural programming language, such as a "C" language or a similar programming language. The program codes can be executed entirely on a user computer, partially executed on the user computer, executed as a separate software package, partially executed on the user computer and partially executed on a remote computer, or entirely executed on the remote computer or a server. When a remote computer is involved, the remote computer can be connected to a user computer by using any type of network, including a local area network (LAN) or a wide area network (WAN), or can be connected to an external computer (e.g., connected by using an Internet service provider through the Internet).

Based on the itinerary search method provided by the above embodiment, an embodiment of the present application provides an apparatus for executing the above itinerary search method correspondingly. A schematic structural diagram of the apparatus is as shown in FIG. 2. The apparatus includes:
a personalized configuration front-end 10 configured to generate rules for itinerary and fare calculations; and
a search engine 20 configured to determine, when a user request is received, a target rule matched with the user request from the rules, perform the itinerary and fare calculations based on the target rule, and output corresponding results.

Optionally, the personalized configuration front-end 10 is specifically configured to
obtain, in response to a rule configuration instruction, sales location information, air route information, itinerary conditions, a fare parameter, a filtering parameter, and a sorting parameter that correspond to each rule to be configured; and
the search engine 20 is further configured to
perform simulation based on the sales location information, the air route information, the itinerary conditions, the fare parameter, the filtering parameter, and the sorting parameter that correspond to each rule to determine a status of each rule, where the status includes an effective status or an ineffective status.

Optionally, the search engine 20 configured to determine, when a user request is received, a target rule matched with the user request from the rules, perform the itinerary and fare calculations based on the target rule, and output corresponding results is specifically configured to:
extract rules in the effective status from the rules, and determine a matching order based on ranks of the extracted rules; sequentially match the point-of-sale information and the air route information between the user request and the extracted rules in the matching order to determine the target rule in the extracted rules that matches the user request; if the target rule is not empty, determine a calculation order based on ranks of the itinerary conditions in the target rule; and sequentially calculate the itinerary conditions and the fare parameter that correspond to the target rule in the calculation order, filter the calculated results based on the filtering parameter corresponding to the target rule, and sort the filtered results based on the sorting parameter corresponding to the target rule to output a sorted result.

Optionally, the search engine 20 configured to determine, when a user request is received, a target rule matched with the user request from the rules, perform the itinerary and fare calculations based on the target rule, and output corresponding results is further configured to
return, if the target rule is empty, a neutral result.

It is to be noted that, for the detailed functions of the personalized configuration front-end 10 and the search engine 20 in this embodiment of the present application, reference can be made to the corresponding disclosed parts in the above configuration file verification method embodiment, and details will not be repeated herein.

The functions described above herein can be performed, at least in part, by one or more hardware logic components. For example, hardware logic components that can be used as examples include, unlimitedly, a field-programmable gate array (FPGA), an application-specific integrated circuit (ASIC), an application-specific standard product (ASSP), a system-on-chip (SOC), a complex programmable logic device (CPLD), and the like.

Based on the itinerary search method provided by the above embodiment, an embodiment of the present application further provides an electronic device, characterized in that the electronic device includes at least one memory and at least one processor, where the memory stores an application program, the processor calls the application program stored in the memory, and the application program is configured to implement the itinerary search method.

Reference is made to FIG. 6 below that shows a schematic structural diagram of an electronic device 600 suitable for implementing the embodiments of the present application. The terminal device in the embodiments of the present application may include, but is not limited to, a mobile terminal such as a mobile phone, a laptop computer, a digital radio receiver, a PDA (personal digital assistant), a PAD (tablet computer), a PMP (portable multimedia player), and a vehicle-mounted terminal (e.g., a vehicle-mounted navigation terminal), and a fixed terminal such as a digital TV and a desktop computer. The electronic device shown in FIG. 6 is merely an example and should not impose any limitations on the functions and scope of use of the embodiments of the present application.

As shown in FIG. 6, the electronic device 600 may include a processing apparatus (e.g., a central processing unit, a graphics processing unit, or the like) 601, which can perform various appropriate actions and processing based on a program stored in a read-only memory (ROM) 602 or a program loaded from a storage apparatus 609 to a random access memory (RAM) 603. Various programs and data necessary for operation of the electronic device 600 are also stored in the RAM 603. The processing apparatus 601, the ROM 602, and the RAM 603 are connected to one another through a bus 604. An input/output (I/O) interface 605 is also connected to the bus 604.

Typically, the following apparatuses can be connected to the I/O interface 605: an input apparatus 606 including, for example, a touch screen, a touch pad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 can allow the electronic device 600 to be in wireless or wired communication with other devices to exchange data. Although FIG. 6 shows the electronic device 600 with various apparatuses, it should be understood that it is not required to implement or possess all the apparatuses shown. Alternatively, more or fewer apparatuses can be implemented or possessed.

Based on the itinerary search method provided by the above embodiment, an embodiment of the present application further provides a storage medium, characterized in that the storage medium stores computer program codes which, when executed, implement the itinerary search method.

In the context of the present application, the storage medium may be a tangible medium that may contain or store a program for use by or in combination with an instruction execution system, apparatus, or device. The storage medium may be either a machine-readable signal medium or a machine-readable storage medium. The storage medium may include, but is not limited to, an electronic, magnetic, optical, electromagnetic, infrared, or semiconductor system, apparatus, or device, or any proper combination thereof. A more specific example of the machine-readable storage medium includes an electrical connection based on one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any proper combination thereof.

It is to be noted that the above storage medium in the present application may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, or device, or any combination thereof. A more specific example of the computer-readable storage medium may include, but is not limited to, an electrical connection with one or more wires, a portable computer disk, a hard disk, a random access memory (RAM), a read-only memory (ROM), an erasable programmable read-only memory (EPROM or flash), an optical fiber, a portable compact disk read-only memory (CD-ROM), an optical storage device, a magnetic storage device, or any proper combination of thereof. In the present application, the computer-readable storage medium may be any tangible medium containing or storing a program that can be used by or in combination with an instruction execution system, apparatus, or device. In the present application, the computer-readable signal medium may include a data signal propagated in a baseband or propagated as a part of a carrier, where the data signal carries computer-readable program codes. Such a propagated data signal may be in a variety of forms, including but not limited to an electromagnetic signal, an optical signal, or any suitable combination thereof. The computer-readable signal medium may also be any storage medium other than the computer-readable storage medium. The computer-readable signal medium can send, propagate, or transmit the program used by or in combination with the instruction execution system, apparatus, or device. The program codes contained in the storage medium can be transmitted by using any suitable medium, including but not limited to an electric wire, an optical cable, RF (radio frequency), or any suitable combination thereof.

The above storage medium may be included in the above electronic device or exist alone without being assembled in the electronic device.

According to one or more embodiments of the present application, an itinerary search method is provided, including:
generating rules for itinerary and fare calculations; and
when a user request is received, determining a target rule matched with the user request from the rules, performing the itinerary and fare calculations based on the target rule, and outputting corresponding results.

According to one or more embodiments of the present application, an itinerary search method is provided. The generating rules for itinerary and fare calculations includes:
obtaining, in response to a rule configuration instruction, point-of-sale information, air route information, itinerary conditions, a fare parameter, a filtering parameter, and a sorting parameter that correspond to each rule to be configured; and
performing simulation based on the point-of-sale information, the air route information, the itinerary conditions, the fare parameter, the filtering parameter, and the sorting parameter that correspond to each rule to determine a status of each rule, where the status includes an effective status or an ineffective status.

According to one or more embodiments of the present application, an itinerary search method is provided. The determining a target rule matched with the user request from the rules, performing the itinerary and fare calculations based on the target rule, and outputting corresponding results includes:
extracting rules in the effective status from the rules, and determining a matching order based on ranks of the extracted rules;
sequentially matching the point-of-sale information and the air route information between the user request and the extracted rules in the matching order to determine the target rule in the extracted rules that matches the user request;
if the target rule is not empty, determining a calculation order based on ranks of the itinerary conditions in the target rule; and
sequentially calculating the itinerary conditions and the fare parameter that correspond to the target rule in the calculation order, filtering the calculated results based on the filtering parameter corresponding to the target rule, and sorting the filtered results based on the sorting parameter corresponding to the target rule to output a sorted result.

According to one or more embodiments of the present application, an itinerary search method is provided. The determining a target rule matched with the user request from the rules, performing the itinerary and fare calculations based on the target rule, and outputting corresponding results further includes:
returning, if the target rule is empty, a neutral result.

According to one or more embodiments of the present application, an itinerary search apparatus is provided, including:
a personalized configuration front-end configured to generate rules for itinerary and fare calculations; and
a search engine configured to determine, when a user request is received, a target rule matched with the user request from the rules, perform the itinerary and fare calculations based on the target rule, and output corresponding results.

According to one or more embodiments of the present application, an itinerary search apparatus is provided. The personalized configuration front-end is specifically configured to
obtain, in response to a rule configuration instruction, sales location information, air route information, itinerary conditions, a fare parameter, a filtering parameter, and a sorting parameter that correspond to each rule to be configured; and
the search engine is further configured to
perform simulation based on the sales location information, the air route information, the itinerary conditions, the fare parameter, the filtering parameter, and the sorting parameter that correspond to each rule to determine a status of each rule, where the status includes an effective status or an ineffective status.

According to one or more embodiments of the present application, an itinerary search apparatus is provided. The search engine configured to determine, when a user request is received, a target rule matched with the user request from the rules, perform the itinerary and fare calculations based on the target rule, and output corresponding results is specifically configured to:
extract rules in the effective status from the rules, and determine a matching order based on ranks of the extracted rules; sequentially match the point-of-sale information and the air route information between the user request and the extracted rules in the matching order to determine the target rule in the extracted rules that matches the user request; if the target rule is not empty, determine a calculation order based on ranks of the itinerary conditions in the target rule; and sequentially calculate the itinerary conditions and the fare parameter that correspond to the target rule in the calculation order, filter the calculated results based on the filtering parameter corresponding to the target rule, and sort the filtered results based on the sorting parameter corresponding to the target rule to output a sorted result.

According to one or more embodiments of the present application, an itinerary search apparatus is provided. The search engine configured to determine, when a user request is received, a target rule matched with the user request from the rules, perform the itinerary and fare calculations based on the target rule, and output corresponding results is further configured to
return, if the target rule is empty, a neutral result.

According to one or more embodiments of the present application, an electronic device is provided. The electronic device includes at least one memory and at least one processor, where the memory stores an application program, the processor calls the application program stored in the memory, and the application program is configured to implement the itinerary search method.

According to one or more embodiments of the present application, a storage medium is provided. The storage medium stores computer program codes which, when executed, implement the itinerary search method.

Although the subject matter has been described in language specific to structural features and/or methodological logical actions, it should be understood that the subject matter defined in the appended claims is not necessarily limited to the specific features or actions described above. Rather, the specific features and actions described above are merely example forms of implementing the claims.

Although several specific implementation details are included in the above description, these should not be interpreted as limiting the scope of the present application. Some features described in the context of individual embodiments may also be implemented in combination in a single embodiment. Conversely, the various features described in the context of a single embodiment may also be implemented individually or in any suitable sub-combination in a plurality of embodiments.

The above description only covers the preferred embodiments of the present application and the explanation of the technical principles applied. Those skilled in the art should understand that the scope of disclosure involved in the present application is not limited to the technical solutions formed by the specific combination of the above technical features, and should also cover other technical solutions formed by any combination of the above technical features or their equivalent features without departing from the above application concept. For example, there exist technical solutions that are formed by mutually replacing the above features with the technical features having similar functions (but not limited to) disclosed in the present application.

## Claims

1. An itinerary search method, **characterized by** comprising:
generating rules for itinerary and fare calculations; and
when a user request is received, determining a target rule matched with the user request from the rules, performing the itinerary and fare calculations based on the target rule, and outputting corresponding results.

2. The method according to claim 1, **characterized in that** the generating rules for itinerary and fare calculations comprises:
obtaining, in response to a rule configuration instruction, point-of-sale information, air route information, itinerary conditions, a fare parameter, a filtering parameter, and a sorting parameter that correspond to each rule to be configured; and
performing simulation based on the point-of-sale information, the air route information, the itinerary conditions, the fare parameter, the filtering parameter, and the sorting parameter that correspond to each rule to determine a status of each rule, wherein the status comprises an effective status or an ineffective status.

3. The method according to claim 2, **characterized in that** the determining a target rule matched with the user request from the rules, performing the itinerary and fare calculations based on the target rule, and outputting corresponding results comprises:
extracting rules in the effective status from the rules, and determining a matching order based on ranks of the extracted rules;
sequentially matching the point-of-sale information and the air route information between the user request and the extracted rules in the matching order to determine the target rule in the extracted rules that matches the user request;
if the target rule is not empty, determining a calculation order based on ranks of the itinerary conditions in the target rule; and
sequentially calculating the itinerary conditions and the fare parameter that correspond to the target rule in the calculation order, filtering the calculated results based on the filtering parameter corresponding to the target rule, and sorting the filtered results based on the sorting parameter corresponding to the target rule to output a sorted result.

4. The method according to claim 3, **characterized in that** the determining a target rule matched with the user request from the rules, performing the itinerary and fare calculations based on the target rule, and outputting corresponding results further comprises:
if the target rule is empty, returning a neutral result.

5. An itinerary search apparatus, **characterized by** comprising:
a personalized configuration front-end configured to generate rules for itinerary and fare calculations; and
a search engine configured to determine, when a user request is received, a target rule matched with the user request from the rules, perform the itinerary and fare calculations based on the target rule, and output corresponding results.

6. The apparatus according to claim 5, **characterized in that** the personalized configuration front-end is specifically configured to
obtain, in response to a rule configuration instruction, sales location information, air route information, itinerary conditions, a fare parameter, a filtering parameter, and a sorting parameter that correspond to each rule to be configured; and
the search engine is further configured to
perform simulation based on the sales location information, the air route information, the itinerary conditions, the fare parameter, the filtering parameter, and the sorting parameter that correspond to each rule to determine a status of each rule, wherein the status comprises an effective status or an ineffective status.

7. The apparatus according to claim 6, **characterized in that** the search engine configured to determine, when a user request is received, a target rule matched with the user request from the rules, perform the itinerary and fare calculations based on the target rule, and output corresponding results is specifically configured to:
extract rules in the effective status from the rules, and determine a matching order based on ranks of the extracted rules; sequentially match the point-of-sale information and the air route information between the user request and the extracted rules in the matching order to determine the target rule in the extracted rules that matches the user request; if the target rule is not empty, determine a calculation order based on ranks of the itinerary conditions in the target rule; and sequentially calculate the itinerary conditions and the fare parameter that correspond to the target rule in the calculation order, filter the calculated results based on the filtering parameter corresponding to the target rule, and sort the filtered results based on the sorting parameter corresponding to the target rule to output a sorted result.

8. The apparatus according to claim 7, **characterized in that** the search engine configured to determine, when a user request is received, a target rule matched with the user request from the rules, perform the itinerary and fare calculations based on the target rule, and output corresponding results is further configured to
return, if the target rule is empty, a neutral result.

9. An electronic device, **characterized by** comprising at least one memory and at least one processor, wherein the memory stores an application program, the processor calls the application program stored in the memory, and the application program is configured to implement the itinerary search method according to any one of claims 1 to 4.

10. A storage medium, **characterized by** storing computer program codes which, when executed, implement the itinerary search method according to any one of claims 1 to 4.
